# EUROPEAN PATENT SPECIFICATION

(11) **EP 2 477 429 B1**
(45) Date of publication and mention of the grant of the patent: **20.06.2018**
(21) Application number: 10814915.4
(22) Date of filing: 12.05.2010
(51) Int. Cl.: H04W 12/04, H04W 12/06, H04W 80/04

(54) **METHOD, APPARATUS AND SYSTEM FOR HOME AGENT OBTAINING MOBILE NODE-HOME AGENT KEY IN PROXY MOBILE INTERNET PROTOCOL**
VERFAHREN, VORRICHTUNG UND SYSTEM FÜR EINEN HEIMAGENTEN ZUR ERMITTLUNG VON MOBILKNOTEN-HEIMAGENTENSCHLÜSSELN IN EINEM PROXY-MOBILINTERNET-PROTOKOLL
PROCÉDÉ, APPAREIL ET SYSTÈME PERMETTANT À UN AGENT LOCAL D'OBTENIR UNE CLÉ D'AGENT LOCAL DE NOEUD MOBILE DANS UN PROTOCOLE INTERNET MOBILE MANDATAIRE

(30) Priority: 10.09.2009 CN 200910161980
(43) Date of publication of application: 18.07.2012
(73) Proprietor: ZTE Corporation, Shenzhen, Guangdong 518057 (CN)
(72) Inventor: XU, Xiaofan, Guangdong 518057 (CN)
(74) Representative: Novagraaf Technologies
(86) International application number: PCT/CN2010/072685
(87) International publication number: WO 2011/029313

(56) References cited:
- WO-A1-2008/118480
- WO-A2-2007/056313
- CN-A- 101 291 215
- CN-A- 101 656 959
- KR-A- 20040 036 118
- US-A1- 2003 147 537
- US-A1- 2007 107 047
- US-A1- 2008 295 154
- US-A1- 2009 116 651
- US-A1- 2009 132 817
- US-A1- 2009 172 403
- US-B1- 7 277 416
- "Network PMIP Support", 3GPP2 DRAFT; X.S0061-0, 3RD GENERATION PARTNERSHIP PROJECT 2, 3GPP2, 2500 WILSON BOULEVARD, SUITE 300, ARLINGTON, VIRGINIA 22201 ; USA , vol. TSGX, no. Version 1.0 18 February 2009 (2009-02-18), pages 1-43, XP062267886, Retrieved from the Internet: URL:http://ftp.3gpp2.org/TSGX/Working/2009 /2009-02-Shanghai/TR45.8-2009-02-Shanghai/ 458 20090219-09 Publication Authorization Files for TIA-1160/ [retrieved on 2009-02-18]
- RAJESH BHALLA-ZTE: "X.P0043", 3GPP2 DRAFT; X31-20061030-XXXA HW HRPD FHO PMIP SECURITY, 3RD GENERATION PARTNERSHIP PROJECT 2, 3GPP2, 2500 WILSON BOULEVARD, SUITE 300, ARLINGTON, VIRGINIA 22201 ; USA , vol. TSGX 1 November 2006 (2006-11-01), pages 1-31, XP062232027, Retrieved from the Internet: URL:http://ftp.3gpp2.org/TSGX/Working/2006 /2006-10/TSG-X-2006-10-Northbrook/WG3-PSN/ SWG31-PDS/ [retrieved on 2006-11-01]
- HOSEONG JEON ET AL: 'Identification Key Based AAA Mechanism in Mobile IP Networks' ICCSA 2004, LNCS vol. 3043, 2004, pages 765 - 775, XP008158906
- G. GIARETTA ET AL: 'AAA Goals for Mobile IPv6, draft-ietf-mext-aaa-ha-goals-01', [Online] 02 May 2008, XP015056053 Retrieved from the Internet: <URL:http://tools.ietf.org/id/draft-ietf-me xt-aaa-ha-goals-01.txt>

## Description

### Field of the Invention

The present invention relates to the field of mobile access and, particularly, to a method, device and system for a home agent (abbreviated as HA) in proxy mobile Internet Protocol (abbreviated as PMIP) to acquire a Mobile Node-Home Agent key (abbreviated as MN-HA key) between a user and the home agent.

### Background of the Invention

Mobile Internet protocol (abbreviated as MIP) is designed for maintaining the connectivity of the terminals during movement, and the MIP includes two versions: Mobile IPv4 (RFC 3344) and Mobile IPv6 (RFC 3775). The IPv4 based MIP defines three functional entities: mobile node (abbreviated as MN), home agent (abbreviated as HA), and foreign agent (abbreviated as FA), and the HA and FA can be collectively referred to as mobile agent. Based on the MIP technology, the MN is capable of achieving network roaming function with fixed IP addresses. When the MN is in a home network, it communicates with peer nodes with a fixed IP address, i.e. home of address (abbreviated as HoA). When the MN is in a foreign network, the HoA of the MN in the home network will not change, and at the same time an FA is found on the basis of the agent discovery protocol and an IP address (i.e. care of address, CoA) allocated thereto by the FA is acquired; and when the MN acquires a new CoA, it registers the binding relationship between the HoA and the CoA in the HA via the FA and the HA is responsible for maintaining the binding list of the HoA and the CoA. When there is a packet to be sent to the MN (the destination address is HoA), the HA to which the MN belongs intercepts this packet and transfers the packet to the MN via a tunnel according to the CoA which the MN registers. The MIP solves the routing problem when the terminal roams under the premise that the routing rules in currently available Internet are not changed by introducing two new function entities of HA and FA and the tunnel technology, and the upper communication connection can be maintained without changing the IP address of the MN.

With the development of the mobile communication technology, the packet domain subsystems of the mobile communication system can provide an MIP based public network or private network access service for the MS (mobile station). When the MIP access mode is used, both the MN and the authentication authorization and accounting (abbreviated as AAA) server need to authenticate the MS.

In relevant art, the HA needs to configure the key (MN-HA Key) between the user and the home agent to authenticate the MS. However, some HAs do not support local configuration of the MN-HA Key, therefore the HA needs to acquire the MN-HA Key from the AAA server. Its particular acquisition procedure includes the following: the HA sends an authentication request (Access Request) message to the AAA server to request the AAA server to authenticate the MS, which message carries username (NAI) and user password (i.e. HA-AAA Key), and after the authentication has passed, the AAA server sends an MN-HA Key to the HA.

In order to achieve the authentication of MS by the AAA server, the AAA server needs to pre-acquire an HA-AAA key between the user and the AAA server for authentication. In relevant art, the AAA server acquires this HA-AAA key from an MIP-RRQ message.

However, the inventors have found that in relevant art when the MS uses the PMIP mode, this HA-AAA key is not carried in the MIP-RRQ message, thus causing the AAA server unable to acquire this HA-AAA key; and in turn causing the AAA server unable to authenticate the MS, thereby causing the authentication of the MS by the HA which does not support local configuration of the MN-HA key to fail, in turn causing the establishment of MIP sessions to fail.

Patent document WO2007/056313 discloses a technical solution to support proxy Mobile IP registration for nodes that do not implement CHAP.

Patent document US2009/013281 relates generally to the visual display of data and, more particularly, to improvements to data visualization techniques.

Patent document US2008/0295154 relates to a method and system for managing mobility of an access terminal in a mobile communication system.

Patent document US2007/0107047 relates to Mobile IP network technology and, more particularly, to supporting proxy Mobile IP registration for nodes that do not support the Challenge Handshake Authentication Protocol (CHAP).

Patent document US2009/0172403 relates to network security field, and more particularly, to a method and system for generating and distributing mobile IP security key after Re-Authentication.

Patent document US2009/0116651 relates to the network security field, in particular, to a method and system for generating and distributing a mobile IP key.

However, the above mentioned problem still remains unsolved.

### Summary of the Invention

The present invention provides a method, device and system for an HA in PMIP to acquire an MN-HA key so as to solve the problem in currently available PMIP that the HA is unable to acquire the MN-HA key from the AAA server in the situation that the HA does not support local configuration of the MN-HA key.

The present invention provides a method for a home agent (HA) in proxy mobile Internet Protocol (PMIP) to acquire an MN-HA key between a user and the home agent, comprising: the HA receiving an MIP registration request (MIP RRQ) message from a foreign agent (FA); sending a first authentication request message to an authentication authorization and accounting (AAA) server to which to an MS belongs, wherein a user password carried in the first authentication request message is an HA-AAA key between the HA and the AAA server; the HA receiving a first authentication response message which carries an MN-HA key returned by the AAA server, wherein the first authentication response message is returned by the AAA server authenticating the HA-AAA key carried in the first authentication request message by using a locally configured HA-AAA key and after the authentication has passed; and acquiring the MN-HA key from the first authentication response message.

The present invention provides a home agent (HA) device, comprising: a first receiving unit configured to receive an MIP registration request (MIP RRQ) message from a foreign agent (FA); a sending unit configured to send a first authentication request message to an authentication authorization and accounting (AAA) server to which to an MS belongs, wherein a user password carried in the first authentication request message is an HA-AAA key between the HA and the AAA server; a second receiving unit configured to receive a first authentication response message which carries an MN-HA key returned by the AAA server, wherein the first authentication response message is returned by the AAA server authenticating the user password carried in the first authentication request message by using a locally configured HA-AAA key and after the authentication has passed; and an acquiring unit configured to acquire the MN-HA key from the first authentication response message.

The present invention provides a method for a home agent (HA) in proxy mobile Internet Protocol (PMIP) to acquire an MN-HA key between a user and the home agent, comprising: an AAA server receiving a first authentication request message sent from an HA, with a user password carried in the first authentication request message being an HA-AAA key between the HA and the AAA server; the AAA server authenticating the user password carried in the first authentication request message by using a locally configured HA-AAA key; and after the authentication has passed, returning a first authentication response message which carries an MN-HA key to the HA so as to enable the HA to acquire the MN-HA key from the received first authentication response message.

The present invention provides an authentication authorization and accounting (AAA) server, comprising: a receiving unit configured to receive a first authentication request message sent from an HA, with a user password carried in the first authentication request message being an HA-AAA key between the HA and the AAA server; an authentication unit configured to authenticate the user password carried in the first authentication request message by using a locally configured HA-AAA key; and a sending unit configured to, after the authentication has passed, returning a first authentication response message which carries an MN-HA key to the HA so as to enable the HA to acquire the MN-HA key from the received first authentication response message.

The present invention provides a system for a home agent (HA) in proxy mobile Internet Protocol (PMIP) to acquire an MN-HA key between a user and the home agent, comprising a foreign agent (FA), a home agent (HA), and an authentication authorization and accounting (AAA) server, wherein the FA is configured to replace an MS to send an MIP registration request (MIP-RRQ) message to an HA to which the MS belongs; the HA is configured to send a first authentication request message to an AAA server to which the MS belongs when receiving the MIP RRQ message, wherein a user password carried in the first authentication request message is an HA-AAA key between the HA and the AAA server; receive a first authentication response message which carries an MN-HA key returned by the AAA server and acquiring the MN-HA key from the first authentication response message; and the AAA server is configured to receive the first authentication request message, authenticate the user password carried in the first authentication request message by using a locally configured HA-AAA key, and return the first authentication response message to the HA after the authentication has passed.

The method, device and system for an HA in PMIP to acquire an MN-HA key provided by the present invention are proposed regarding the situation that the HA in the PMIP does not support local configuration of the MN-HA key, in which when receiving an MIP RRQ message sent by the FA in place of an MS, the HA sends an authentication message to the AAA server to which the MS belongs, and the HA-AAA key is used as the user password; since the HA and the AAA server have pre-configured the HA-AAA key, the AAA server can authenticate the user password carried in the authentication request message and returns an authentication response message which carries an MN-HA key after the authentication has passed so that the HA can acquire the MN-HA key from the authentication response message. The present invention solves the problem that the HA is unable to acquire the MN-HA key from the AAA server in the situation that the HA does not support to locally configure the MN-HA key, so that the HA in the PMIP can still acquire the MN-HA Key from the AAA server, which lays foundation for the successful establishment of MIP sessions.

### Brief Description of the Drawings

Fig. 1 is flowchart I of a method for an HA in the PMIP to acquire an MN-HA key provided by the embodiments of the present invention;
Fig. 2 is flowchart II of the method for an HA in the PMIP to acquire an MN-HA key provided by the embodiments of the present invention;
Fig. 3 is a flow chart of establishing an MIP session in the PMIP provided by the embodiments of the present invention;
Fig 4 is a schematic diagram of the network architecture of a packet domain subsystem in a CDMA2000 system;
Fig. 5 is a flow chart of establishing an MIP session in the PMIP provided by the embodiments of the present invention in the CDMA2000 system;
Fig. 6 is a block diagram of a system for an HA in the PMIP to acquire an MN-HA key provided by the embodiments of the present invention;
Fig. 7 is a structural block diagram of an HA device provided by the embodiments of the present invention; and
Fig. 8 is a structural block diagram of an AAA server device provided by the embodiments of the present invention.

### Detailed Description of Embodiments

First define several basic concepts. If the packet domain subsystem of the mobile communication system can provide MIP based public network or private network access services to the MS, then the MS in the mobile communication system is just the functional entity MN in the MIP, and the MS in the embodiments of the present invention uses the MIP access mode, so it can be referred to as an MIP user; the network entity which has the HA function is also referred to as HA, the network entity which has the FA function is also referred to as FA, the AAA server to which the MS belongs is referred to as a home authentication authorization and accounting (H-AAA) server, and the AAA server in the foreign network is referred to as a visit authentication authorization and accounting (V-AAA) server. The H-AAA and V-AAA are relative to the MS, and as to any AAA server, it may be the H-AAA of some MSs and the V-AAA of some other MSs.

The embodiments of the present invention provide a method for a home agent (HA) in proxy mobile Internet Protocol (PMIP) to acquire an MN-HA key between a user and the home agent, comprising the following steps:
Step A: the HA receives an MIP registration request (MIP RRQ) message from a foreign agent (FA).
Step B: the HA sends a first authentication request message to an authentication authorization and accounting (AAA) server to which to an MS belongs, wherein a user password carried in the first authentication request message is an HA-AAA key between the HA and the AAA server.
Step C: the HA receives a first authentication response message which carries an MN-HA key returned by the AAA server, wherein the first authentication response message is returned by the AAA server authenticating the HA-AAA key carried in the first authentication request message by using a locally configured HA-AAA key and after the authentication has passed.
Step D: the HA acquires the MN-HA key from the first authentication response message.

In relevant art, when the MS uses the PMIP mode, the HA is unable to acquire the MN-AAA key from the MIP-RRQ message. In the embodiments of the present invention, the AAA server pre-configures the HA-AAA key, so that even if the AAA server is unable to acquire the MN-AAA key from the MIP-RRQ message, it still can authenticate the MS by using a locally configured HA-AAA key, which in turn ensures that the AAA server returns the MN-HA key to the HA after the authentication has passed and lays foundation for the successful establishment of MIP sessions.

Preferably, before the HA receives the MIP RRQ message sent by the FA in place of an MS, the MS accesses a foreign network; the MS carries out link control protocol (LCP) negotiation with the FA in the foreign network and negotiates the authentication mode after the LCP negotiation is successful; the MS sends an authentication message to the FA according to a challenge handshake authentication protocol (CHAP) authentication mode of which the negotiation is successful, wherein the authentication message carries username and user password cipher text, and mobile proxy agent (MPA) function attribute indicating that the MS does not support the MIP function; the FA sends a second authentication request message to the AAA server according to the received authentication message, wherein the second authentication request message carries username and user password cipher text, and requests the AAA server to authenticate the MS; the AAA server sends a second authentication response message to the FA after the authentication has passed, wherein the second authentication response message carries the MN-HA key and indicates that the MS supports the MPA function attribute; and the FA learning that the MS supports the MPA function attribute according to the received second authentication response message, then sending the MIP RRQ message to the HA, wherein an MN-HA key to be authenticated is carried in the MIP RRQ message.

It needs to be noted that this preferred embodiment can achieve to send an MN-HA key to be authenticated to the HA, which MN-HA key to be authenticated in combination with the MN-HA key returned to the HA by the AAA server after the authentication has passed can be used to achieve the authentication of MS by the HA, thus it lays foundation for the successful establishment of the MIP sessions.

Preferably, after the HA acquires the MN-HA key from the first authentication response message, the HA authenticates the MN-HA key to be authenticated carried in the MIP RRQ message by using the acquired MN-HA key, establishes an MIP session for the MS after the authentication has passed, and returns an MIP registration response (MIP RRP) message to the FA, wherein the MIP RRP message carries an IP address allocated to the MS; and the FA returns an authentication success message to the MS.

Preferably, after the FA sends the authentication success message to the MS, the MS carries out an Internet protocol control protocol (IPCP) negotiation with the FA, and the FA notifies the MS of the IP address allocated to the MS by the HA after the IPCP negotiation is successful, and the MS accesses successfully.

Preferably, after the MS accesses successfully, the FA sends an accounting request message to the AAA server; and the AAA server returns an accounting response message to the FA.

It needs to be noted that the above preferred embodiment describes the process of authenticating the MS by using the acquired MN-HA key in detail, thus ensuring the successful establishment of MIP sessions and the successful accounting of the MS by the AAA server.

Preferably, in the CDMA 2000 system, the network entity which has the FA function is in particular a packet data service node (PDSN).

The embodiments of the present invention provide a method for a home agent (HA) in proxy mobile Internet Protocol (PMIP) to acquire an MN-HA key between a user and the home agent, comprising the following steps:
Step a: an AAA server receives a first authentication request message sent from an HA, with a user password carried in the first authentication request message being an HA-AAA key between the HA and the AAA server.
Step b: the AAA server authenticates the user password carried in the first authentication request message by using a locally configured HA-AAA key.
Step c: after the authentication has passed, a first authentication response message which carries an MN-HA key is returned to the HA so as to enable the HA to acquire the MN-HA key from the received first authentication response message.

In relevant art, when the MS uses the PMIP mode, the HA is unable to acquire the MN-AAA key from the MIP-RRQ message. In the embodiments of the present invention, the AAA server pre-configures the HA-AAA key, so that even if the AAA server is unable to acquire the MN-AAA key from the MIP-RRQ message, it still can authenticate the MS by using a locally configured HA-AAA key, which in turn ensures that the AAA server returns the MN-HA key to the HA after the authentication has passed and lays foundation for the successful establishment of MIP sessions.

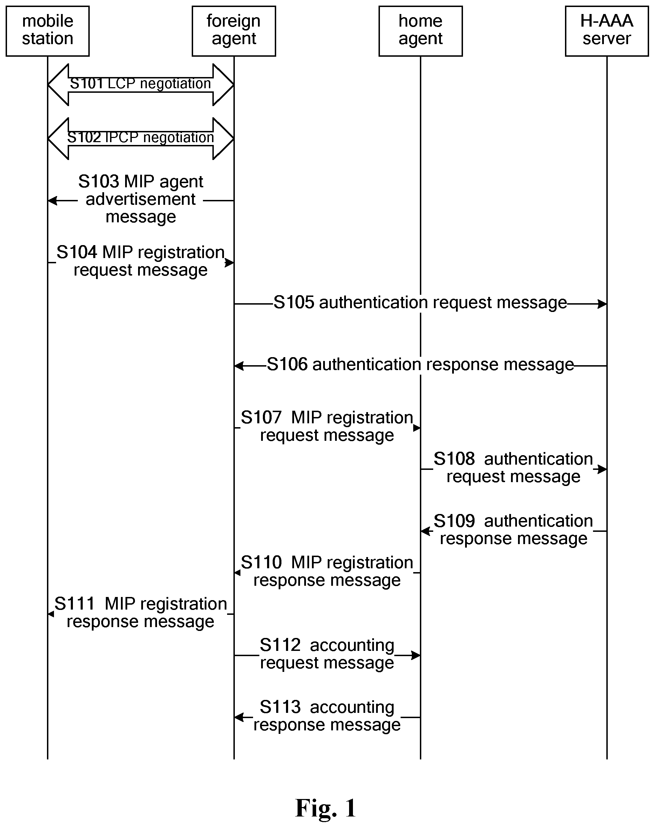

The procedure of establishing an MIP session in currently available CMIP in the situation that the HA does not support local configuration of the MN-HA key will be first introduced, and as shown in Fig. 1, it includes the following steps:
S101: an MS accesses an FA in a foreign network, and the MS and FA carry out a link control protocol (abbreviated as LCP) negotiation;
S102: the MS and FA carry out an Internet protocol control protocol (abbreviated as IPCP) negotiation, wherein the IPCP configuration request not carrying an IP address option sent by the MS indicates that the MS is an MIP user;
S103: the FA learns that the MS is an MIP user and sends an MIP agent advertisement message to the MS;
S104: the MS sends an MIP RRQ (MIP registration request) message carrying the username (NAI) and MN-AAA key (i.e. user password) to request establishing an MIP session;
S105: after having received the MIP RRQ message, the FA sends an authentication request (Access Request) message carrying the username and MN-AAA key (i.e. user password) to the H-AAA server, and requests the H-AAA server to authenticate the MS; and
since the FA is unable to authenticate the MS, as a client of the AAA server, the FA sends an authentication request (Access Request) message to a local AAA server (relative to the MS, it is the AAA server in the visit network), i.e. V-AAA server. And since the MS is a foreign user relative to the V-AAA server, the V-AAA server requests the AAA server (i.e. the H-AAA server) to which the MS belongs to authenticate the MS based on the remote authentication dial in user service (RADIUS) protocol, and the communication between the V-AAA server and the H-AAA server may need the participation of a broker authentication authorization and accounting (abbreviated as B-AAA) sever on the way, which is equal to that the FA sends an Access Request message to the H-AAA server.
S106: after the authentication has passed, the H-AAA returns an authentication response (Access Accept) message to the FA, wherein the message carries the authorization information of the user which includes the MN-HA key;
S107: after the authentication of the MS has passed, the FA forwards the MIP RRQ message sent by the MS to the HA, wherein the MIP RRQ message carries the MN-HAA key, i.e. the user password and encrypted MN-HAA key;
S108: the HA sends an authentication request (Access Request) message to the H-AAA, wherein the message carries the username (NAI) and MN-AAA key (i.e. user password) in the MIP RRQ message;
S109: after the authentication has passed, the H-AAA returns an authentication response (Access Accept) message to the HA, wherein the message carries the MN-HA key;
S110: the HA authenticates the encrypted MN-HA key carried in the MIP RRQ message forwarded by the FA by using the MN-HA key carried in this Access Accept message, and after the authentication has passed, establishes an MIP session for the MS, and returns an MIP registration response (abbreviated as MIP RRP) message to the FA, wherein the MIP registration response message carries the authorization information of the user which includes an IP address allocated to the MS;
S111: the FA forwards the MIP RRP message returned by the HA to the MS, and the MS (MIP user) accesses successfully;
S112: the FA sends an accounting request (Acct Request/start) message to the H-AAA; and
S113: the H-AAA returns an accounting response (Acct Response) message to the FA; and
afterwards, the MS can transmit packets.

Regarding the problem in the currently available PMIP that the HA is unable to acquire the MN-HA key from the AAA server in the situation that the HA does not support local configuration of the MN-HA key, the inventors have found that the key point of this problem lies in the following: the FA in stead of the MS in the PMIP sends the MIP RRQ message which does not carry an MN-AAA key. That is to say, without a user password, the HA is unable to learn this user password, which makes the user password unable to be carried in the Access Request message, causing the AAA server unable to carry out authentication and not to send the MN-HA key. Based on this, the embodiments of the present invention propose that: the HA takes the key (HA-AAA key) between the HA and the AAA server as a user password carried in the Access Request message sent to the AAA server. The HA-AAA key is the basis of authentication between the HA and the AAA server. And before the MIP user accesses, the HA-AAA key has to be pre-configured in the HA and the AAA server, and the use of the HA-AAA key as the user password carried in the Access Request message solves the above problems.

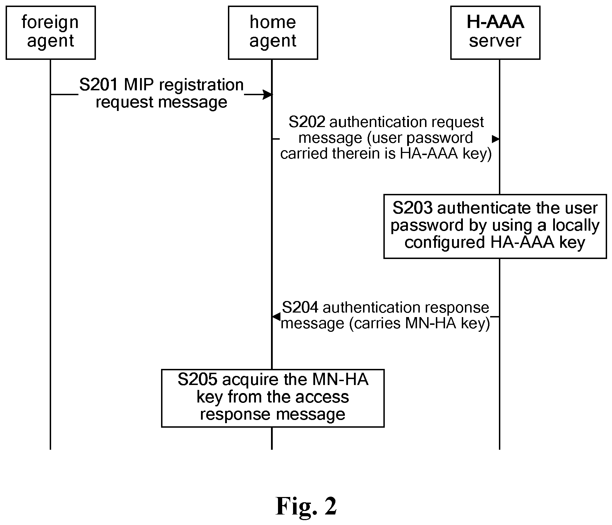

As shown in Fig. 2, the embodiments of the present invention provide a method for an HA in the PMIP to acquire an MN-HA key, comprising
S201: an FA replaces an MS to send an MIP RRQ (MIP registration request) message to an HA, which message does not carry an MN-AAA key, i.e. user password;
S202: when receiving the MIP RRQ message, the HA sends an authentication request (Access Request) message to an AAA server (i.e. H-AAA server) to which the MS belongs, wherein the user password carried therein is an HA-AAA key;
S203: the H-AAA server authenticates the user password carried in the Access Request message by using a locally configured HA-AAA key;
S204: after the authentication has passed, the AAA server returns an authentication response (Access Accept) message which carries an MN-HA key to the HA; and
S205: the HA receives the Access Accept message returned by the H-AAA server and acquires the MN-HA key from the Access Accept message.

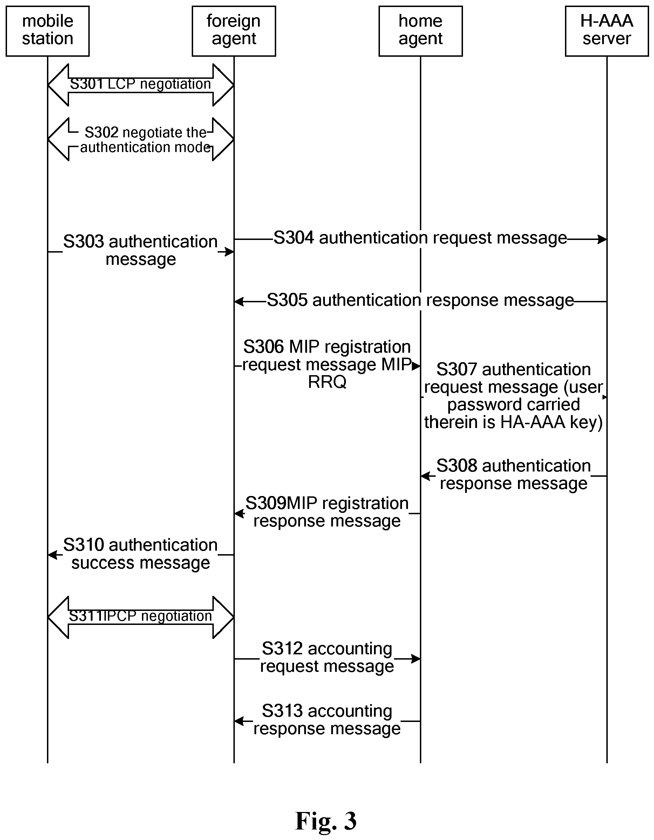

Based on the above method for an HA in the PMIP to acquire an MN-HA key, in the PMIP provided by the embodiments of the present invention, in the situation that the HA does not support local configuration of the MN-HA key, the establishment procedure of an MIP session, as shown in Fig. 3, includes:
S301-S302: an MS accesses an FA in a foreign network. The MS carries out an LCP negotiation with the FA and negotiates the authentication mode after the LCP negotiation is successful;
S303: the MS sends an authentication message to the FA according to a CHAP authentication mode the negotiation of which is successful, wherein username and user password cipher text and mobile proxy agent (abbreviated as MPA) function attribute being carried therein indicates that it does not support the MIP function;
S304: the FA sends an authentication request (Access Request) message to the H-AAA server according to the received authentication message, wherein the message carries username and user password cipher text, and requests the H-AAA server to authenticate the MS;
S305: after the authentication has passed, the H-AAA server returns an authentication response (Access Accept) message to the FA, wherein the message carries the MN-HA key and indicates that it supports the MPA function attribute;
S306: the FA learns that the MS uses the MPA function according to the received Access Accept message, then it replaces the MS to send the MIP RRQ message to the HA, wherein it carries the encrypted MN-HA key;
S307: the HA sends an authentication request (Access Request) message to the H-AAA server, wherein the user password carried in the message is the HA-AAA key;
S308: the H-AAA server authenticates the user password carried in the Access Request message by using a pre-configured HA-AAA key, and after the authentication has passed, it returns an authentication response (Access Accept) message to the HA, wherein the message carries the MN-HA key;
S309: the HA acquires the MN-HA key from the Access Accept message, authenticates the encrypted MN-HA key carried in the MIP RRQ message by using the acquired MN-HA key, establishes an MIP session for the MS after the authentication has passed, and returns an MIP RRP (MIP registration response) message to the FA, wherein the MIP RRP message carries the IP address allocated to the MS.
S310: the FA returns an authentication success message to the MS;
S311: the MS carries out an IPCP negotiation with the FA, and the IP address allocated to the MS by the HA is notified to the MS after the negotiation is successful, and the MS (MIP user) accesses successfully;
S312: after the MS accesses successfully, the FA sends an accounting request (Acct Request/start) message to the H-AAA; and
S313: the H-AAA server returns an accounting response (Acct Response) message to the FA; and

Afterwards, the MS can transmit packets.

During the establishment procedure of the MIP session, the HA takes the HA-AAA key as the user password in the Access Request message sent to the H-AAA server, the H-AAA server authenticates the user password according to a locally configured HA-AAA key, and returns an MN-HA key to the HA after the authentication has passed, which enables the HA to acquire the MN-HA key from the H-AAA server so as to complete the authentication of the MS and ensure the successful establishment of the MIP session.

Hereinafter, the CDMA2000 system will be taken as an example of mobile communication system for description. The packet domain subsystem of the CDMA2000 system can provide simple IP based public network/private network access service and MIP based public network/private network access service for the MS. When the MS uses the MIP mode to access, it can use either a static IP address or a dynamic IP address, which mainly depends on the IP network to which the MS belongs. In the CDMA2000 system, a key point of using the MIP application is to introduce a network entity packet data service node (abbreviated as PDSN) which supports the FA function.

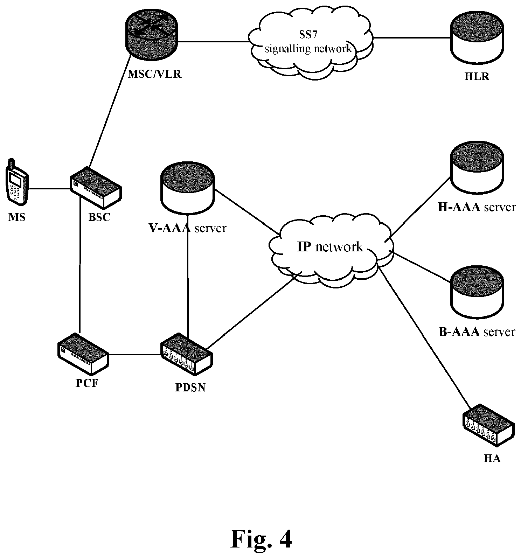

The network architecture of the MIP based packet domain subsystem is as shown in Fig. 4, including: an MS, a base station controller (BSC), a packet control function (PCF), a mobile switching center/visit location register (MSC/VLR), an HA, a PDSN, anAAA server, etc. In this case:
the MS (mobile station) is such as mobile phone or wireless network card;
the BSC and PCF are equipments at the base station side, wherein the PCF is mainly used for establishing, maintaining and terminating the connection from the link layer to the PDSN and requesting and managing radio resources together with the radio resource control (RRC), so as to forward packets between MSs;
the PDSN is equivalent to an FA during the establishment procedure of an MIP session and responsible for forwarding an MIP RRQ message sent by the MS and an MIP RRP message returned by the HA; and
the HA authenticates the MS and is a network element of allocating the IP address for the MS.

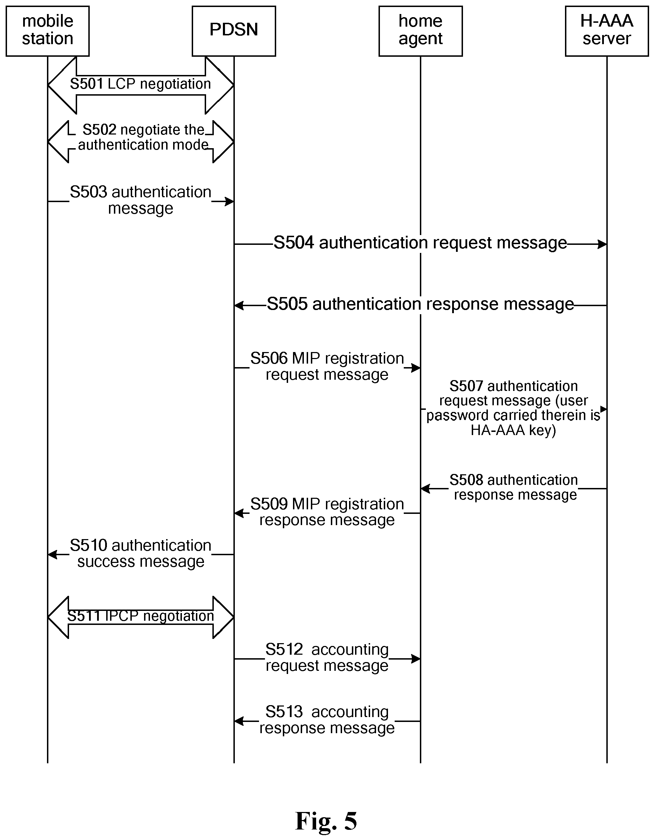

In the CDMA2000 system, in the PMIP provided by the embodiments of the present invention, in the situation that the HA does not support local configuration of the MN-HA key, the establishment procedure of the MIP session, as shown in Fig. 5, includes:
S501-S502: an MS accesses a PDSN in a foreign network, and the MS carries out an LCP negotiation with the PDSN and negotiates the authentication mode after the LCP negotiation is successful;
during the practical implementation, it includes the following steps:
   Step 1: the MS sends an LCP Configure-Request to the PDSN and starts the LCP connection negotiation process so as to establish a PPP connection between the MS and the PDSN;
   Step 2: the PDSN returns an LCP Configure-Ack (LCP configure acknowledge) to the MS so as to confirm that the PPP connection has already been established;
   if the PDSN does not agree some configuration options sent by the MS, then it can return an LCP Configure-Nak for rejection, and the MS will resend an LCP Configure-Request which is different from the previous configuration option to the PDSN;
   Step 3: the PDSN sends an LCP Configure-Request to the MS and negotiates the authentication mode with the MS;
   the PDSN first negotiates to use the challenge handshake authentication protocol (abbreviated as CAHP) authentication mode, and if the negotiation fails, then it negotiates to use the password authentication protocol (abbreviated as PAP) authentication mode;
   Step 4: the MS returns an LCP Configure-Ack to the PDSN to confirm to use the authentication mode designated by the PDSN;
   if the MS does not agree the authentication mode designated by the PDSN, then it can return an LCP Configure-Nak for rejection, and the PDSN function entity will resend an LCP Configure-Request which is different from the previous configuration option to the MS;
   the PAP mode is a two-handshake authentication mode, the password is plaintext, and the PAP mode authentication process is as follows: the MS sends a username and user password to the PDSN function entity, and the PDSN function entity returns an authentication response message to the MS after having locally stored the username and user password;
   the CHAP authentication mode is a three-handshake authentication mode and the password is cipher text. The CHAP mode authentication process is as follows: the MS sends a username (NAI) to the PDSN, the PDSN returns a packet which is generated randomly to the MS, the MS encrypts the user password by using the MD5 algorithm, and then sends the user password cipher text to the PDSN, and the PDSN returns an authentication response message to the MS after having locally stored the username and user password cipher text;
   S503: during the practical implementation, the authentication mode of which the negotiation is successful is the CAHP authentication mode, the MS starts up the authentication process according to the authentication mode of which the negotiation is successful, i.e. the CAHP authentication mode, and the MS sends an authentication message to the PDSN, wherein the authentication message carries the username and user password cipher text (the user password is exactly the MN-AAA key) and the MPA function attribute indicates that it does not support the MIP function;
   S504: the PDSN sends an Access Request message to the H-AAA server, wherein the message carries the username and user password cipher text, and requests the H-AAA server to authenticate the MS;
   S505: after the authentication has passed, the H-AAA server returns an Access Accept message to the PDSN, wherein the message carries the authorization information of the user which includes the MN-HA key and indicates that it supports the MPA function attribute;
   S506: the PDSN learns that the MS uses the MPA function according to the received Access Accept message, then the PDSN replaces the MS to send the MIP RRQ message to the HA, wherein the MIP RRQ message carries the encrypted MN-HA key;
   S507: the HA sends an Access Request message to the H-AAA server, wherein the attribute value corresponding to the attribute of the user password is HA-AAA key;
   S508: the H-AAA sever authenticates the user password carried in the Access Request message by using a pre-configured HA-AAA key, and after the authentication has passed, returns an Access Accept message to the HA, wherein the message carries the authorization information of the user which includes the MN-HA key so that the HA authenticates the MN.
   Step S509: the HA authenticates the encrypted MN-HA key carried in the MIP RRQ message by using the MN-HA key carried in the Access Accept message, after the authentication has passed, establishes an MIP session for the MS, and returns an MIP RRP message to the PDSN, wherein the MIP RRP message carries the authorization information of the user which includes the IP address allocated to the MS.
   S510: the PDSN returns an authentication success message to the MS;
   S511: the MS carries out an IPCP negotiation with the PDSN and notifies the MS of the IP address allocated to the MS by the HA after the negotiation is successful, and the MS (MIP user) accesses successfully;
   S512: after the MS accesses successfully, the PDSN sends an Acct Request/start message to the H-AAA; and
   S513: the H-AAA server returns an Acct Response message to the PDSN; and
   afterwards, the MS can transmit packets.

The access, handover or refresh of the MIP user need to carry out the above procedure, and therefore the method for an HA to acquire an MN-HA key provided by the embodiments of the present invention is applicable to various procedures of the MIP user, such as access, handover, or refresh and so on.

The embodiments of the present invention take the CDMA2000 system as an example for description, and those skilled in the art should understand that this solution is capable of being applied in other mobile communication systems which can provide the MIP access mode, and the only difference lies in that different network architectures may have different network entities with HA or FA function, however, the core concept and practical implementation procedure are the same.

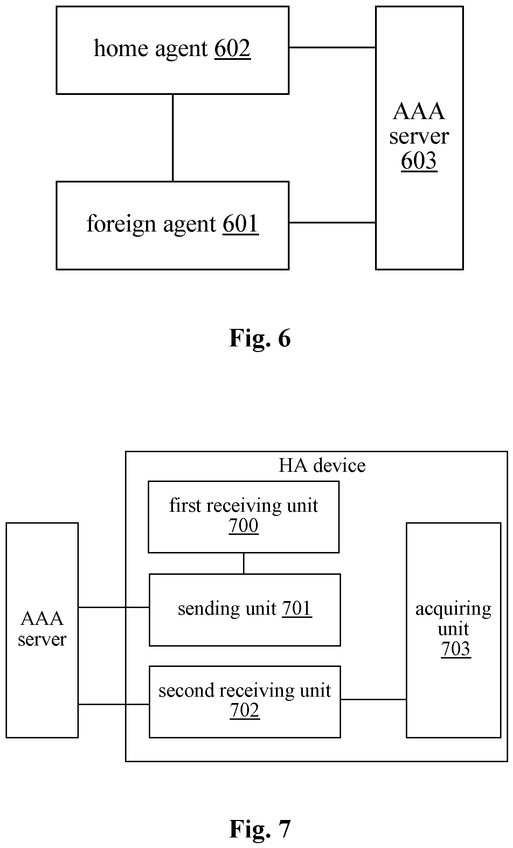

Based on the same technical concept, the embodiments of the present invention provide a system for an HA in the PMIP, to acquire an MN-HA key and as shown in Fig. 6, the system comprises an FA 601, HA 602, and an AAA server 603, wherein:
the FA 601 is configured to replace the MS to send an MIP RRQ message to an HA to which the MS belongs;
the HA 602 is configured to send a first authentication request message to an AAA server to which the MS belongs when receiving the MIP RRQ message, wherein a user password carried in the first authentication request message is an HA-AAA key; receive a first authentication response message which carries an MN-HA key returned by the AAA server; and acquire the MN-HA key from the first authentication response message; and
the AAA server 603 is configured to receive the first authentication request message, authenticate the user password carried in the first authentication request message by using a locally configured HA-AAA key, and return a first authentication response message to the HA after the authentication has passed.

In this case, a possible structure of the HA device is shown in Fig. 7, and it comprises:
a first receiving unit 700, in replace of an MS, configured to receive an MIP registration request (MIP RRQ) message from an FA;
a sending unit 701 configured to send a first authentication request message to an AAA server to which the MS belongs, wherein a user password carried therein is an HA-AAA key;
a second receiving unit 702 configured to receive a first authentication response message which carries an MN-HA key returned by the AAA server, wherein the first authentication response message is returned by the AAA server authenticating the user password carried in the first authentication request message by using a locally configured HA-AAA key and after the authentication has been passed; and
an acquiring unit 703 being connected to the second receiving unit 702 and configured to derive the MN-HA key from the first authentication response message received by the second receiving unit 702.

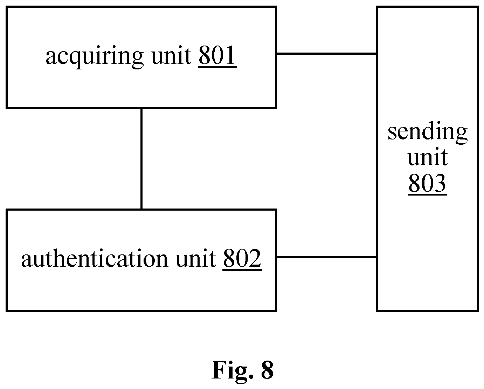

In this case, a possible structure of the AAA server device is shown in Fig. 8, and it comprises:
a receiving unit 801 configured to receive a first authentication request message sent from an HA, with a user password carried in the first authentication request message being an HA-AAA key;
an authentication unit 802 configured to authenticate the user password carried in the first authentication request message by using a locally configured HA-AAA key; and
a sending unit 803 configured to, after the authentication has passed, return a first authentication response message which carries an MN-HA key to the HA so as to enable the HA to acquire the MN-HA key from the received first authentication response message.

The solution for an HA in the PMIP to acquire an MN-HA key provided by the embodiments of the present invention is proposed regarding the situation that the HA in the PMIP does not support local configuration of the MN-HA key, in which when receiving an MIP RRQ message sent from the FA in stead of an MS, the HA sends an authentication request message to the AAA server to which the MS belongs and takes the HA-AAA key as the user password; since the HA and AAA server have pre-configured the HA-AAA key, the AAA server can authenticate the user password carried in the authentication request message and returns an authentication response message which carries an MN-HA key after the authentication has passed, which enables the HA to acquire the MN-HA key from the authentication response message. The present invention solves the problem that the HA is unable to acquire the MN-HA key from the AAA server in the situation that the HA does not support local configuration of the MN-HA key, which enables the HA in the PMIP still to acquire the MN-HA key from the AAA server and lays foundation for the successful establishment of MIP sessions.

Apparently, those skilled in the art can make various modifications and alternatives to the present invention without departing from scope of the present invention. In this way, should these modifications and alternatives of the present invention belong to the scope of the claims and equivalent technologies thereof, then the present invention is also intended to include these modification and alternatives.

## Claims

1. A method for a home agent, HA, in proxy mobile Internet Protocol, PMIP, to acquire an MN-HA key between a mobile station, MS, of a user and the home agent, the method comprising the steps of:
the HA in the PMIP receiving an MIP registration request, MIP RRQ, message from a foreign agent, FA;
the HA sending a first authentication request message to an authentication authorization and accounting, AAA, server to which the mobile station, MS, of the user belongs, wherein a user password carried in the first authentication request message is an HA-AAA key between the HA and the AAA server;
the HA receiving a first authentication response message which carries the MN-HA key returned by the AAA server, wherein the first authentication response message is returned by the AAA server authenticating the HA-AAA key carried in the first authentication request message by using a locally configured HA-AAA key and after the authentication has passed; and
the HA acquiring the MN-HA key from the first authentication response message.

2. The method as claimed in Claim 1, **characterized by**, before the HA receives the MIP RRQ message from the FA, further comprising:
the MS accessing a foreign network;
the MS carrying out a link control protocol, LCP, negotiation with the FA in the foreign network and negotiating an authentication mode after the LCP negotiation is successful;
the MS sending an authentication message to the FA according to a challenge handshake authentication protocol, CHAP, authentication mode of which the negotiation is successful, wherein the authentication message carries username, user password cipher text, and mobile proxy agent, MPA, function attribute indicating that the MS does not support the MIP function;
the FA sending a second authentication request message to the AAA server according to the received authentication message, wherein the second authentication request carries username and user password cipher text, and requests the AAA server to authenticate the MS;
the AAA server sending a second authentication response message to the FA after the authentication has passed, wherein the second authentication response message carries the MN-HA key and indicates that the MS supports the MPA function attribute; and
the FA learning that the MS supports the MPA function attribute according to the received second authentication response message, then sending the MIP RRQ message to the HA, wherein the MIP RRQ message carries an MN HA key to be authenticated.

3. The method as claimed in Claim 2, **characterized by**, after the HA acquires the MN-HA key from the first authentication response message, further comprising:
the HA authenticating the MN-HA key to be authenticated carried in the MIP RRQ message by using the acquired MN-HA key, establishing an MIP session for the MS after the authentication has passed, and returning an MIP registration response, MIP RRP, message to the FA, wherein the MIP RRP message carries an IP address allocated to the MS; and
the FA returning an authentication success message to the MS.

4. The method as claimed in Claim 3, **characterized by**, after the FA returning the authentication success message to the MS, further comprising:
the MS carrying out an Internet protocol control protocol, IPCP, negotiation with the FA, and the FA notifying the MS of the IP address allocated to the MS by the HA after the IPCP negotiation is successful, and the MS accessing successfully.

5. The method as claimed in Claim 4, **characterized by** further comprising:
after the MS accesses successfully, the FA sending an accounting request message to the AAA server; and
the AAA server returning an accounting response message to the FA.

6. The method as claimed in any one of Claims 1-5, **characterized in that** in a code division multiple access, CDMA, 2000 system, a network entity which has the FA function is in particular a packet data service node, PDSN.

7. A home agent, HA, device (602) in proxy mobile Internet Protocol, PMIP, comprising:
a first receiving unit (700) configured to receive an MIP registration request, MIP RRQ, message from a foreign agent, FA;
a sending unit (701) configured to send a first authentication request message to an authentication authorization and accounting, AAA, server to which an MS of a user belongs, wherein a user password carried in the first authentication request message is an HA-AAA key between the HA and the AAA server;
a second receiving unit (702) configured to receive a first authentication response message which carries an MN-HA key between the MS and the HA and returned by the AAA server, wherein the first authentication response message is returned by the AAA server authenticating the user password carried in the first authentication request message by using a locally configured HA-AAA key and after the authentication has passed; and
an acquiring unit (703) configured to acquire the MN-HA key from the first authentication response message.

8. A method for a home agent, HA, in proxy mobile Internet Protocol, PMIP, to acquire an MN-HA key between a mobile station, MS, of a user and the home agent, comprising:
an AAA server receiving a first authentication request message sent from an HA, with a user password carried in the first authentication request message being an HA-AAA key between the HA and the AAA server;
the AAA server authenticating the user password carried in the first authentication request message by using a locally configured HA-AAA key; and
after the authentication has passed, returning a first authentication response message which carries an MN-HA key to the HA so as to enable the HA to acquire the MN-HA key from the received first authentication response message.

9. An authentication authorization and accounting, AAA, server device (603), comprising:
a receiving unit (801) configured to receive a first authentication request message sent from a home agent, HA, with a user password carried in the first authentication request message being an HA-AAA key between the HA and the AAA server;
an authentication unit (802) configured to authenticate the user password carried in the first authentication request message by using a locally configured HA-AAA key; and
a sending unit (803) configured to, after the authentication has passed, returning a first authentication response message which carries an MN-HA key to the HA so as to enable the HA to acquire the MN-HA key between a MS of the user and the HA from the received first authentication response message.

10. A system for a home agent, HA, in proxy mobile Internet Protocol, PMIP, to acquire an MN-HA key between a mobile station, MS, of a user and the home agent, the system comprising a foreign agent, FA(601), a home agent, HA(602), and an authentication authorization and accounting, AAA, server (603), wherein
the FA (601) is configured to send an MIP registration request, MIP-RRQ, message to an HA to which the MS belongs;
the HA (602) is configured to send a first authentication request message to an AAA server (603) to which the MS belongs when receiving the MIP RRQ message, wherein a user password carried in the first authentication request message is an HA-AAA key between the HA (602) and the AAA server (603); and configured to receive a first authentication response message which carries an MN-HA key returned by the AAA server (603) and acquiring the MN-HA key from the first authentication response message; and
the AAA server (603) is configured to receive the first authentication request message, authenticate the user password carried in the first authentication request message by using a locally configured HA-AAA key, and return the first authentication response message to the HA (602) after the authentication has passed.

## Patentansprüche

1. Verfahren für einen Heimagenten, HA, bei Proxy-Mobile-Internetprotokoll, PMIP, zum Erhalten eines MN-HA-Schlüssels zwischen einer Mobilstation, MS, eines Benutzers und dem Heimagenten,
wobei das Verfahren die folgenden Schritte umfasst:
Empfangen einer MIP-Registrierungsanfragenachricht, MIP RRQ, durch den HA im PMIP von einem Agenten im Fremdnetz, FA;
Senden durch den HA einer ersten Authentifizierungsanforderungsnachricht an einen Authentifizierungs-, Autorisierungs- und Abrechnungsserver, AAA, dem die Mobilstation, MS, des Benutzers zugehörig ist, wobei ein in der ersten Authentifizierungsanforderungsnachricht transportiertes Benutzerpasswort ein HA-AAA-Schlüssel zwischen dem HA und dem AAA-Server ist;
Empfangen durch den HA einer ersten Authentifizierungsantwortnachricht, die den vom AAA-Server zurückgesendeten MN-HA-Schlüssel transportiert, wobei die erste Authentifizierungsantwortnachricht vom AAA-Server zurückgesendet wird zum Authentifizieren des HA-AAA-Schlüssels, der in der ersten Authentifizierungsanforderungsnachricht transportiert wurde, unter Verwenden eines lokal konfigurierten HA-AAA-Schlüssels und nach erfolgreicher Authentifizierung; und
Erhalten des MN-HA-Schlüssels durch den HA aus der ersten Authentifizierungsantwortnachricht.

2. Verfahren nach Anspruch 1, **dadurch gekennzeichnet, dass** es, bevor der HA die MIP RRQ-Nachricht vom FA erhält, weiter umfasst:
Zugreifen der MS auf ein Fremdnetz;
Ausführen durch die MS einer Link-Control-Protokoll-Verhandlung, LCP, mit dem FA im Fremdnetz, und Verhandeln eines Authentifizierungsmodus nachdem die LCP-Verhandlung erfolgreich ist;
Senden durch die MS einer Authentifizierungsnachricht an den FA gemäß einem Authentifizierungsmodus nach Challenge-Handshake-Authentifizierungsprotokoll, CHAP, dessen Verhandlung erfolgreich ist, wobei die Authentifizierungsnachricht Benutzername, Benutzerpasswort in Geheimtext und Funktionsattribute des mobilen Proxyagenten, MPA, transportiert und so anzeigt, dass die MS die MIP-Funktion nicht unterstützt;
Senden durch den FA einer zweiten Authentifizierungsanforderungsnachricht an den AAA-Server gemäß der empfangenen Authentifizierungsnachricht, wobei die zweite Authentifizierungsanfrage Benutzername und Benutzerpasswort in Geheimtext transportiert, und vom AAA-Server anfordert, die MS zu authentifizieren;
Senden durch den AAA-Server einer zweiten Authentifizierungsantwortnachricht an den FA nach erfolgreicher Authentifizierung, wobei die zweite Authentifizierungsantwortnachricht den MN-HA-Schlüssel transportiert und anzeigt, dass die MS das MPA-Funktionsattribut unterstützt; und
Lernen durch den FA, dass die MS das MPA-Funktionsattribut gemäß der empfangenen zweiten Authentifizierungsantwortnachricht unterstützt, dann Senden der MIP RRQ-Nachricht an den HA, wobei die MIP RRQ-Nachricht einen zu authentifizierenden MN HA-Schlüssel transportiert.

3. Verfahren nach Anspruch 2, **dadurch gekennzeichnet, dass** es, nachdem der HA den MN-HA-Schlüssel aus der ersten Authentifizierungsantwortnachricht erhält, weiter umfasst:
Authentifizieren durch den HA des zu authentifizierenden MN-HA-Schlüssels, der in der MIP RRQ-Nachricht transportiert wird, durch Verwenden des erhaltenen MN-HA-Schlüssels, Aufbauen einer MIP-Sitzung für die MS nach erfolgreicher Authentifizierung und Zurücksenden einer MIP-Registrierungsantwortnachricht, MIP RRP, an den FA, wobei die MIP RRP-Nachricht eine der MS zugewiesene IP-Adresse transportiert; und
Zurücksenden durch den FA einer Nachricht mit dem Authentifizierungserfolg an die MS.

4. Verfahren nach Anspruch 3, **dadurch gekennzeichnet, dass** es, nach Zurücksenden durch den FA der Nachricht mit dem Authentifizierungserfolg an die MS, weiter umfasst:
Ausführen durch die MS einer Internetprotokoll-Kontrollprotokoll-Verhandlung, IPCP, mit dem FA, und Mitteilen durch den FA an die MS der der MS durch den HA nach erfolgreicher IPCP-Verhandlung zugewiesenen IP-Adresse, und erfolgreiches Zugreifen der MS.

5. Verfahren nach Anspruch 4, **dadurch gekennzeichnet, dass** es weiter umfasst:
nach erfolgreichem Zugreifen der MS, Senden durch den FA einer Abrechnungsanfragenachricht an den AAA-Server; und
Zurücksenden durch den AAA-Server einer Abrechnungsantwortnachricht an den FA.

6. Verfahren nach einem der Ansprüche 1-5, **dadurch gekennzeichnet, dass** in einem 2000-System mit Codemultiplexverfahren, CDMA, eine Netzinstanz, die die FA-Funktion aufweist, insbesondere ein Paketdaten-Dienstknoten, PDSN, ist.

7. Heimagent-Vorrichtung, HA (602) bei Proxy-Mobile-Internetprotokoll, PMIP, umfassend:
eine erste empfangende Einheit (700), die konfiguriert ist, um eine MIP-Registrierungsanfragenachricht, MIP RRQ, von einem Agenten im Fremdnetz, FA, zu empfangen;
eine sendende Einheit (701), die konfiguriert ist, um eine ersten Authentifizierungsanfragenachricht an einen Authentifizierungs-, Autorisierungs- und Abrechnungsserver, AAA, zu senden, dem eine MS eines Benutzers zugehörig ist, wobei ein in der ersten Authentifizierungsanforderungsnachricht transportiertes Benutzerpasswort ein HA-AAA-Schlüssel zwischen dem HA und dem AAA-Server ist;
eine zweite empfangende Einheit (702), die konfiguriert ist, um eine erste Authentifizierungsantwortnachricht zu empfangen, die einen MN-HA-Schlüssel zwischen der MS und dem HA transportiert und vom AAA-Server zurückgesendet wurde, wobei die erste Authentifizierungsantwortnachricht vom AAA-Server zurückgesendet wird, um das in der ersten Authentifizierungsanforderungsnachricht transportierte Benutzerpasswort unter Verwenden eines lokal konfigurierten HA-AAA-Schlüssels und nach erfolgreicher Authentifizierung zu authentifizieren; und
eine erhaltende Einheit (703), die konfiguriert ist, um den MN-HA-Schlüssel aus der ersten Authentifizierungsantwortnachricht zu erhalten.

8. Verfahren für einen Heimagenten, HA, bei Proxy-Mobile-Internetprotokoll, PMIP, zum Erhalten eines MN-HA-Schlüssels zwischen einer Mobilstation, MS, eines Benutzers und dem Heimagenten, umfassend:
einen AAA-Server, der eine erste Authentifizierungsanforderungsnachricht empfängt, die von einem HA gesendet wird, wobei ein in der ersten Authentifizierungsanforderungsnachricht transportiertes Benutzerpasswort ein HA-AAA-Schlüssel zwischen dem HA und dem AAA-Server ist;
einen AAA-Server, der das in der ersten Authentifizierungsanforderungsnachricht transportierte Benutzerpasswort unter Verwenden eines lokal konfigurierten HA-AAA-Schlüssels authentifiziert; und
nach erfolgreicher Authentifizierung, Zurücksenden einer ersten Authentifizierungsantwortnachricht, die einen MN-HA-Schlüssel an den HA transportiert, um es dem HA zu ermöglichen, den MN-HA-Schlüssel aus der empfangenen ersten Authentifizierungsantwortnachricht zu erhalten.

9. Authentifizierungs-, Autorisierungs- und Abrechnungsservervorrichtung, AAA (603), umfassend:
eine empfangende Einheit (801), die konfiguriert ist, um eine von einem Heimagenten, HA, gesendete erste Authentifizierungsanforderungsnachricht zu empfangen, wobei ein in der ersten Authentifizierungsanforderungsnachricht transportiertes Benutzerpasswort ein HA-AAA-Schlüssel zwischen dem HA und dem AAA-Server ist;
eine authentifizierende Einheit (802), die konfiguriert ist, um das in der ersten Authentifizierungsanforderungsnachricht transportierte Benutzerpasswort unter Verwenden eines lokal konfigurierten HA-AAA-Schlüssels zu authentifizieren; und
eine sendende Einheit (803), die konfiguriert ist, um nach erfolgreicher Authentifizierung eine erste Authentifizierungsantwortnachricht zurückzusenden, die einen MN-HA-Schlüssel an den HA transportiert, um es dem HA zu ermöglichen, den MN-HA-Schlüssel zwischen einer MS des Benutzers und dem HA aus der empfangenen ersten Authentifizierungsantwortnachricht zu erhalten.

10. System für einen Heimagenten, HA, bei Proxy-Mobile-Internetprotokoll, PMIP, zum Erhalten eines MN-HA-Schlüssels zwischen einer Mobilstation, MS, des Benutzers und dem Heimagenten, wobei das System einen Agenten im Fremdnetz, FA (601), einen Heimagenten, HA (602) und einen Authentifizierungs-, Autorisierungs- und Abrechnungsserver, AAA (603) umfasst, wobei
der FA (601) konfiguriert ist, um eine MIP-Registrierungsanfragenachricht, MIP-RRQ, an einen HA zu senden, zu dem die MS zugehörig ist;
der HA (602) konfiguriert ist, um eine erste Authentifizierungsanforderungsnachricht an einen AAA-Server (603) zu senden, zu dem die MS zugehörig ist, wenn die MIP RRQ-Nachricht empfangen wird, wobei ein in der ersten Authentifizierungsanforderungsnachricht transportiertes Benutzerpasswort ein HA-AAA-Schlüssel zwischen dem HA (602) und dem AAA-Server (603) ist; und konfiguriert ist, um eine erste Authentifizierungsantwortnachricht zu empfangen, die einen MN-HA-Schlüssel transportiert, der vom AAA-Server (603) zurückgesendet wurde, und um den MN-HA-Schlüssel aus der ersten Authentifizierungsantwortnachricht zu erhalten; und
der AAA-Server (603) konfiguriert ist, um die erste Authentifizierungsanforderungsnachricht zu empfangen, das in der ersten Authentifizierungsanforderungsnachricht transportierte Benutzerpasswort unter Verwenden eines lokal konfigurierten HA-AAA Schlüssels zu authentifizieren und die erste Authentifizierungsantwortnachricht nach erfolgreicher Authentifizierung an den HA (602) zurückzusenden.

## Revendications

1. Procédé pour permettre à un agent local, HA, dans un protocole Internet mobile mandataire, PMIP, d'acquérir une clé MN-HA entre une station mobile, MS, d'un utilisateur et l'agent local,
le procédé comprenant les étapes suivantes :
la réception par l'HA dans le PMIP d'un message de demande d'enregistrement MIP, MIP RRQ, à partir d'un agent étranger, FA ;
l'envoi par l'HA d'un premier message de demande d'authentification à un serveur d'authentification, d'autorisation et de comptabilité, AAA, auquel la station mobile, MS, de l'utilisateur appartient, dans lequel un mot de passe d'utilisateur contenu dans le premier message de demande d'authentification est une clé HA-AAA entre l'HA et le serveur AAA ;
la réception par l'HA d'un premier message de réponse d'authentification qui contient la clé MN-HA renvoyée par le serveur AAA, dans lequel le premier message de réponse d'authentification est renvoyé par le serveur AAA en authentifiant la clé HA-AAA contenue dans le premier message de demande d'authentification en utilisant une clé HA-AAA configurée localement et après que l'authentification a réussi ; et
l'acquisition par l'HA de la clé MN-HA à partir du premier message de réponse d'authentification.

2. Procédé selon la revendication 1, **caractérisé en ce qu'**il comprend en outre, avant que l'HA reçoive le message MIP RRQ à partir du FA :
l'accès par la MS à un réseau étranger ;
l'exécution d'une négociation de protocole de commande de liaison, LPC, avec le FA dans le réseau étranger et la négociation, par la MS, d'un mode d'authentification après que la négociation LCP est réussie ;
l'envoi par la MS d'un message d'authentification au FA en fonction d'un mode d'authentification de protocole d'authentification de prise de contact par défi, CHAP, dont la négociation est réussie, dans lequel le message d'authentification contient un nom d'utilisateur, un texte chiffré de mot de passe d'utilisateur et un attribut de fonction d'agent mandataire mobile, MPA, indiquant que la MS ne prend pas en charge la fonction MIP ;
l'envoi par le FA d'un deuxième message de demande d'authentification au serveur AAA en fonction du message d'authentification reçu, dans lequel la deuxième demande d'authentification contient un nom d'utilisateur et un texte chiffré de mot de passe d'utilisateur, et demande au serveur AAA d'authentifier la MS ;
l'envoi par le serveur AAA d'un deuxième message de réponse d'authentification au FA après que l'authentification a réussi, dans lequel le deuxième message de réponse d'authentification contient la clé MN-HA et indique que la MS prend en charge l'attribut de fonction MPA ; et
la prise de connaissance que la MS prend en charge l'attribut de fonction MPA en fonction du deuxième message de réponse d'authentification reçu, puis l'envoi, par le FA, du message MIP RRQ à l'HA, dans lequel le message MIP RRQ contient une clé MN HA à authentifier.

3. Procédé selon la revendication 2, **caractérisé en ce qu'**il comprend en outre, après que l'HA acquiert la clé MN-HA à partir du premier message de réponse d'authentification :
l'authentification de la clé MN-HA à authentifier contenue dans le message MIP RRQ en utilisant la clé MN-HA acquise, l'établissement d'une session MIP pour la MS après que l'authentification a réussi, et le renvoi, par l'HA, d'une réponse d'enregistrement MIP, MIP RRP, au FA, dans lequel le message MIP RRP contient une adresse IP allouée à la MS ; et
le renvoi par le FA d'un message de succès d'authentification à la MS.

4. Procédé selon la revendication 3, **caractérisé en ce qu'**il comprend en outre, après le renvoi par le FA du message de succès d'authentification à la MS :
l'exécution par la MS d'une négociation de protocole de commande de protocole Internet, IPCP, avec le FA, et la notification par le FA à la MS de l'adresse IP allouée à la MS par l'HA après que la négociation IPCP est réussie, et l'accès par la MS avec succès.

5. Procédé selon la revendication 4, **caractérisé en ce qu'**il comprend en outre :
après que la MS accède avec succès, l'envoi par le FA d'un message de demande de comptabilité au serveur AAA ; et
le renvoi par le serveur AAA d'un message de réponse de comptabilité au FA.

6. Procédé selon l'une quelconque des revendications 1 à 5, **caractérisé en ce que**, dans un système d'accès multiple par répartition en code, CDMA, 2000, une entité de réseau qui a la fonction de FA est en particulier un noeud de service de données par paquets, PDSN.

7. Dispositif d'agent local, HA, (602) dans un protocole Internet mobile mandataire, PMIP, comprenant :
une première unité de réception (700) configurée pour recevoir un message de demande d'enregistrement MIP, MIP RRQ, à partir d'un agent étranger, FA ;
une unité de transmission (701) configurée pour envoyer un premier message de demande d'authentification à un serveur d'authentification, d'autorisation et de comptabilité, AAA, auquel la MS d'un utilisateur appartient, dans lequel un mot de passe contenu dans le premier message de demande d'authentification est une clé HA-AAA entre l'HA et le serveur AAA ;
une deuxième unité de réception (702) configurée pour recevoir un premier message de réponse d'authentification qui contient une clé MN-HA entre la MS et l'HA et renvoyée par le serveur AAA, dans lequel le premier message de réponse d'authentification est renvoyé par le serveur AAA en authentifiant le mot de passe d'utilisateur contenu dans le premier message de demande d'authentification en utilisant une clé HA-AAA configurée localement et après que l'authentification a réussi ; et
une unité d'acquisition (703) configurée pour acquérir la clé MN-HA à partir du premier message de réponse d'authentification.

8. Procédé pour permettre à un agent local, HA, dans un protocole Internet mobile mandataire, PMIP, d'acquérir une clé MN-HA entre une station mobile, MS, d'un utilisateur et l'agent local, comprenant :
la réception par un serveur AAA d'un premier message de demande d'authentification envoyé par un HA, avec un mot de passe d'utilisateur contenu dans le premier message de demande d'authentification qui est une clé HA-AAA entre l'HA et le serveur AAA ;
l'authentification par le serveur AAA du mot de passe d'utilisateur contenu dans le premier message de demande d'authentification en utilisant une clé HA-AAA configurée localement ; et
après que l'authentification a réussi, le renvoi d'un premier message de réponse d'authentification qui contient une clé MN-HA à l'HA de manière à permettre à l'HA d'acquérir la clé MN-HA à partir du premier message de réponse d'authentification reçu.

9. Dispositif de serveur d'authentification, d'autorisation et de comptabilité, AAA, (603), comprenant :
une unité de réception (801) configurée pour recevoir un premier message de demande d'authentification envoyé par un agent local, HA, avec un mot de passe d'utilisateur contenu dans le premier message de demande d'authentification qui est une clé HA-AAA entre l'HA et le serveur AAA ;
une unité d'authentification (802) configurée pour authentifier le mot de passe d'utilisateur contenu dans le premier message de demande d'authentification en utilisant une clé HA-AAA configurée localement ; et
une unité de transmission (803) configurée pour, après que l'authentification a réussi, renvoyer un premier message de réponse d'authentification qui contient une clé MN-HA à l'HA de manière à permettre à l'HA d'acquérir la clé MN-HA entre une MS de l'utilisateur et l'HA à partir du premier message de réponse d'authentification reçu.

10. Système pour permettre à un agent local, HA, dans un protocole Internet mobile mandataire, PMIP, d'acquérir une clé MN-HA entre une station mobile, MS, d'un utilisateur et l'agent local, le système comprenant un agent étranger, FA (601), un agent local, HA (602) et un serveur d'authentification, d'autorisation et de comptabilité (603), AAA, dans lequel
le FA (601) est configuré pour envoyer un message de demande d'enregistrement MIP, MIP RRQ, à un HA auquel la MS appartient ;
l'HA (602) est configuré pour envoyer un premier message de demande d'authentification à un serveur AAA (603) auquel la MS appartient quand il reçoit le message MIP RRQ, dans lequel un mot de passe d'utilisateur contenu dans le premier message de demande d'authentification est une clé HA-AAA entre l'HA (602) et le serveur AAA (603) ; et configuré pour recevoir un premier message de réponse d'authentification qui contient une clé MN-HA renvoyée par le serveur AAA (603) et acquérir la clé MN-HA à partir du premier message de réponse d'authentification ; et
le serveur AAA (603) est configuré pour recevoir le premier message de demande d'authentification, authentifier le mot de passe d'utilisateur contenu dans le premier message de demande d'authentification en utilisant une clé HA-AAA configurée localement, et renvoyer le premier message de réponse d'authentification à l'HA (602) après que l'authentification a réussi.
